(19) Europäisches Patentamt
European Patent Office
Office européen des brevets

(11) **EP 2 085 883 A1**

(12) **EUROPÄISCHE PATENTANMELDUNG**

(43) Veröffentlichungstag:
**05.08.2009 Patentblatt 2009/32**

(51) Int Cl.:
***G06F 11/07*** *(2006.01)*

(21) Anmeldenummer: **08105511.3**

(22) Anmeldetag: **08.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **22.11.2007 DE 102007056218**

(71) Anmelder: **ROBERT BOSCH GMBH**
**70442 Stuttgart (DE)**

(72) Erfinder:
• **Boehl, Michael**
**70184 Stuttgart (DE)**
• **Braun, Sven**
**76448 Durmersheim (DE)**
• **Gmehlich, Rainer**
**71254 Ditzingen (DE)**
• **Hartmann, Uwe**
**70839 Gerlingen (DE)**

(54) **Verfahren zur Behandlung von transienten Fehlern in Echtzeitsystemen, insbesondere in Steuergeräten von Kraftfahrzeugen**

(57) Die Erfindung betrifft ein Verfahren zur Behandlung von transienten Fehlern In Echtzeitsystemen, insbesondere in Steuergeräten von Kraftfahrzeugen, deren auf Programmcodes basierender Betriebsablauf von einer Ablaufsteuerung kontinuierlich überwacht wird.

Um eine Vielzahl von möglichen, innerhalb von elektronischen Steuergeräten auftretenden Hardware- und Softwarefehler behandeln zu können, ohne dass die Verfügbarkeit des Systems eingeschränkt wird, wird der Programmcode (13) in eine Mehrzahl von Laufzeitobjekten (8, 12) unterteilt und bei der Feststellung eines Fehlers in einem Laufzeitobjekt (8), dieses Laufzeitobjekt(8) von der Ablaufsteuerung abgebrochen (10) und während des Betriebsablaufes eine lokale Fehlerbehandlung (11) innerhalb des Laufzeitobjektes (8) durchgeführt , wobei die Fehlerbehandlung (11) eine dem Laufzeitobjekt (8) zugeordnete Maßnahmen zur Erreichung eines sicheren Zustandes umfasst und nach abgeschlossener Fehlerbehandlung (11) die Ausführung des nächstfolgenden Laufzeitobjektes (12) gestartet wird.

Fig. 3

EP 2 085 883 A1

**Beschreibung**

Die Erfindung betrifft ein Verfahren zur Behandlung von transienten Fehlern in Echtzeitsystemen, insbesondere in Steuergeräten von Kraftfahrzeugen, deren auf Programmcodes basierender Betriebsablauf von einer Ablaufsteuerung kontinuierlich überwacht wird gemäß dem Oberbegriff des Patentanspruchs 1.

An Steuergeräte in Kraftfahrzeugen werden hohe Anforderungen hinsichtlich Sicherheit und Zuverlässigkeit gestellt. Um die Systemsicherheit beim Auftreten von transienten Fehlern in Komponenten wie in Speichern (RAM, ROM bzw. Flash) oder im Rechnerkern auf das entsprechende Maß einzustellen, werden an verschiedenen Stellen im Steuergerät Überwachungen implementiert. Transiente Fehler treten unverhofft durch die Einwirkung von elektromagnetischer Strahlung aber auch durch kosmische oder radioaktive Strahlungseinflüsse auf und sind daher nicht vorhersehbar.

Auf erkannte Fehler kann in unterschiedlichster Art und Weise reagiert werden. Die einfachste Art das Steuergerät in einen sicheren Zustand zu versetzen, ist die Abschaltung des Systems. Weiterhin sind zur Fehlerbehandlung Mechanismen wie die Korrektur von Speicherfehlern durch ECC (Error Correction Code) bekannt, wobei der erkannte Fehler direkt am Speicher behandelt wird. Ist dies nicht möglich, wird häufig auf ein Reset des Steuergerätes zurückgegriffen.

Bei einem anderen Fehlerbehandlungsmechanismus wird redundant mit zwei Programmcodes auf nur einem oder in Multicore-Systemen auf verschiedenen Prozessoren gerechnet. Die Ausgabewerte werden durch Vergleich auf Übereinstimmung überwacht, wobei bei Abweichung auf einen Fehler erkannt wird. Tritt ein Fehler auf, wird der fehlerbehaftete Programmcode abgeschaltet und nur noch mit dem fehlerfreien anderen Programmcode weitergearbeitet.

Der Erfindung liegt die Aufgabe zugrunde ein Verfahren zur Behandlung von transienten Fehlern in Steuergeräten von Kraftfahrzeugen anzugeben, mit welchem eine Vielzahl von möglichen, innerhalb von elektronischen Steuergeräten auftretenden Hardware- und Softwarefehlern behandeln werden können, ohne dass die Verfügbarkeit des Systems eingeschränkt wird.

Erfindungsgemäß wird die Aufgabe dadurch gelöst, dass der Programmcode in eine Mehrzahl von Laufzeitobjekten unterteilt wird und bei Feststellung eines Fehlers in einem Laufzeitobjekt, dieses Laufzeitobjekt von der Ablaufsteuerung abgebrochen wird und während des Betriebsablaufes eine lokale Fehlerbehandlung innerhalb des Laufzeitobjektes durchgeführt wird, wobei die Fehlerbehandlung eine dem Laufzeitobjekt zugeordnete Maßnahme zur Erreichung eines sicheren Zustandes umfasst und nach abgeschlossener Fehlerbehandlung die Ausführung des nächstfolgenden Laufzeitobjektes gestartet wird.

Der Vorteil der Erfindung besteht darin, dass auf eine aufwendige spezifische Fehlerbehandlung direkt in den Hardwarekomponenten verzichtet werden kann. Eine Unterbrechung der Systemverfügbarkeit durch das Abschalten des Steuergerätes oder durch einen Reset entfällt ganz, da das fehlerhafte Laufzeitobjekt während des normal weiter laufenden Betriebsablaufes des Steuergerätes korrigiert wird. Zu jedem Zeitpunkt des Betriebsablaufes wird somit eine sicherheitsunkritische Funktionalität des Steuergerätes unterbrechungsfrei zur Verfügung gestellt.

Dieses Verfahren zur Fehlerbehandlung ist sehr kostengünstig, da es für eine Vielzahl verschiedener auftretender Fehler eingesetzt werden kann.

In Regelsystemen mit festen Regelzyklen, wie es die Steuergeräte für Kraftfahrzeuge sind, müssen keine zusätzlichen Rechenzeitreserven vorgehalten werden.

In einer Weiterbildung der Erfindung verarbeitet das Laufzeitobjekt nach einer ersten Berechnungsvorschrift Eingangsgrößen und in einem Zustandsgrößenspeicher abgelegte interne Zustandsgrößen zu neuen Zustandsgrößen, die einerseits wiederum im Zustandsgrößenspeicher gespeichert und andererseits mit einer zweiten Berechnungsvorschrift mit den Eingangsgrößen zu Ausgangsgrößen verrechnet werden.

Die Laufzeitobjekte enthalten Teile der im Programmcode implementierten Funktionalität und kommunizieren über Input- und Outputschnittstellen mit der Umgebung.

Mit Hilfe eines solchen Laufzeitobjektes werden die Fehlerauswirkungen örtlich und zeitlich durch die Fehlerbehandlung eingegrenzt. Im Fehlerfall werden die Auswirkungen am Ausgang des Steuergerätes minimiert. Die Fehlerauswirkungen werden vernachlässigbar klein und sind nach kurzer Zeit nicht mehr nachweisbar.

Die Aktivierung der Laufzeitobjekte, die Berechnungsreihenfolge der einzelnen Laufzeitobjekte und die dynamische interne Konfiguration der Laufzeitobjekte wird durch eine Ablaufsteuerung verwaltet.

Es gilt das Prinzip, dass Fehlerentdeckung und Fehlerbehandlung lokal innerhalb desselben Laufzeitobjektes erfolgen sollen, um die Auswirkungen auf das Gesamtsystem und die Umgebung zu minimieren.

In einer Ausgestaltung der Erfindung besteht die dem Laufzeitobjekt zugeordnete Fehlerbehandlung darin, dass die bei der letzten erfolgreichen Ausführung des Laufzeitobjektes berechneten und im Zustandsgrößenspeicher gespeicherten Zustandsgrößen mindestens teilweise unverändert erneut im Zustandsgrößenspeicher gespeichert werden. Somit werden bei der Fehlerbehandlung die aktuellen Zustandsgrößen durch Zustandsgrößen aus dem vorhergehenden Durchlauf ersetzt, d.h. die letzten fehlerfreien Ergebnisse werden noch einmal verwendet.

Eine äquivalente Maßnahme wird auch hinsichtlich der Ausgangsgrößen benutzt. Hier besteht die dem Laufzeitobjekt zugeordnete Fehlerbehandlung darin, dass die bei der letzten erfolgreichen Ausführung des Laufzeitobjektes berechneten Ausgangsgrößen mindestens teilweise unverändert als Ausgangsgrößen verwendet werden.

In einer Weiterbildung der Erfindung besteht die dem Laufzeitobjekt zugeordnete Fehlerbehandlung darin, dass vordefinierte Standardwerte mindestens teilweise im Zustandsgrößenspeicher als Zustandsgröße gespeichert oder als Ausgangsgrößen verwendet werden. Diese vordefinierten Standardwerte beruhen auf Erfahrungswerten von internen Zustandsgrößen und Ausgangsgrößen, die normalerweise in einem fehlerfreien Programmdurchlauf des Laufzeitobjektes erzeugt werden.

Eine andere Methode der dem Laufzeitobjekt zugeordneten Fehlerbehandlung besteht darin, eine Ersatzberechnungsvorschrift für Zustandsgrößen und/ oder eine Ersatzberechnungsvorschrift für Ausgangsgrößen an Stelle der implementierten ersten Berechnungsvorschrift für Zustandsgrößen und der zweiten Berechnungsvorschrift für Ausgangsgrößen aufzurufen. Diese Ersatzberechnungsvorschriften sind den primären Berechnungsvorschriften ähnlich. Da sie aber bisher nicht im Programmablauf genutzt wurden, sind sie fehlerfrei. Die Ersatzberechnungsvorschrift versetzt die internen Zustandsgrößen und die Ausgangsgrößen in einen definierten Zustand, der als fehlerfrei bekannt ist. Diese Ersatzberechnungsvorschrift kann auch von aktuellen Eingangsgrößen abhängig sein. Sie unterscheidet sich von den tatsächlichen Berechnungsvorschriften dadurch, dass sie wesentlich geringere Ressourcen an Speicherkapazität und Laufzeit benötigt. Somit wird sichergestellt, dass der Gesamtrechenzeitbedarf des Laufzeitobjektes nicht überstiegen wird.

Weiterhin besteht eine dem Laufzeitobjekt zugeordnete Fehlerbehandlung darin, dass eine vordefinierte Initialisierungsfunktion ausgeführt wird, wobei die Initialisierungswerte im Zustandsgrößenspeicher als interne Zustandsgrößen gespeichert bzw. als Ausgangsgrößen verwendet werden. Mit einer solchen Initialisierung wird das Laufzeitobjekt auf einen fehlerfreien Ausgangszustand gesetzt und kann im nächsten Steuerzyklus wieder normal bei der Programmflusssteuerung benutzt werden. Diese Ersatzfunktion wird somit in Form einer Reinitialisierung genutzt.

Alle die aufgeführten Fehlerbehandlungen werden in Abhängigkeit des detektierten Fehlers ausgewählt und somit alternativ genutzt.

Um die Auswahl der Fehlerbehandlungen zu erleichtern, werden die Laufzeitobjekte in Abhängigkeit von der ersten Berechnungsvorschrift für Zustandsgrößen und/oder der zweiten Berechnungsvorschrift für Ausgangsgrößen in Klassen eingeteilt, wobei jeder Klasse mindestens eine Fehlerbehandlung zugeordnet ist.

Vorteilhafterweise erfolgt die Fehlerbehandlung durch Verwendung vordefinierten Standardwerte, wenn das Laufzeitobjekt signalverarbeitende Algorithmen enthält. Hier besteht eine kurze Einschwingzeit, d.h. nach transienten Fehlern sind alle Eingangsgrößen nach kurzer Zeit wieder fehlerfrei und die Rechenoperationen werden korrekt ausgeführt, so dass die Fehlerauswirkungen an den Ausgängen des Laufzeitobjektes nicht mehr sichtbar sind.

In einer anderen Ausgestaltung verwendet die Fehlerbehandlung die bei der letzten erfolgreichen Ausführung des Laufzeitobjektes berechneten Zustands- und Ausgangsgrößen, wenn kontinuierliche, auf physikalischen Größen basierende Signale bearbeitet werden. Diese Fehlerbehandlung empfiehlt sich für physikalische Größen, die sich in weiten Bereichen ändern. Für diesen Anwendungsfall ist auch die Verwendung einer Ersatzfunktion denkbar.

Um Laufzeit einzusparen, wird in einer anderen Ausgestaltung der Erfindung der Programmcode in eine Mehrzahl von Laufzeitobjekten unterteilt und bei Feststellung eines Fehlers in einem Laufzeitobjekt, dieses Laufzeitobjekt von der Ablaufsteuerung übersprungen und statt dessen während des Betriebsablaufes eine lokale Fehlerbehandlung durchgeführt, wobei die Fehlerbehandlung eine dem Laufzeitobjekt zugeordnete Maßnahme zur Erreichung eines sicheren Zustandes umfasst und nach abgeschlossener Fehlerbehandlung die Ausführung des nächstfolgenden Laufzeitobjektes gestartet.

Diese Maßnahme ist besonders vorteilhaft, wenn sich während eines Ausführungszyklusses herausstellt, dass die noch zur Verfügung stehende Restlaufzeit nicht mehr ausreicht.

Die Erfindung lässt zahlreiche Ausführungsformen zu. Eine davon soll an Hand der in der Zeichnung dargestellten Figuren näher erläutert werden.

Es zeigt:

Figur 1:     prinzipieller Aufbau eines Steuergerätes in einem Kraftfahrzeug

Figur 2:     Aufbau eines Laufzeitobjektes

Figur 3:     prinzipielle Fehlerbehandlung eines Laufzeitobjektes

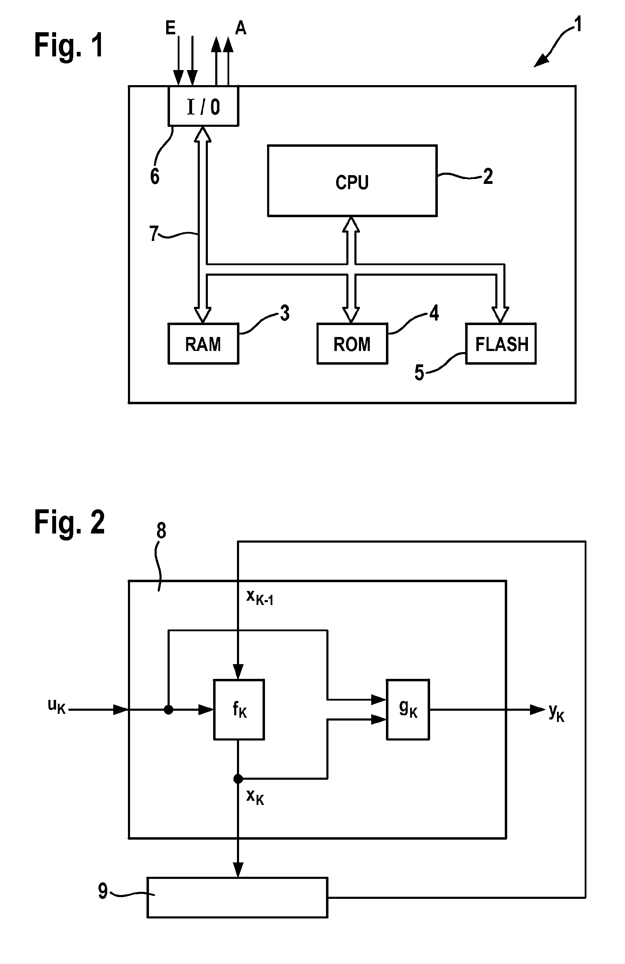

In Figur 1 ist der interne Aufbau eines Steuergerätes 1 dargestellt, wie es üblicherweise in Kraftfahrzeugen Verwendung findet. Dabei ist eine CPU als zentrale Recheneinheit 2 über einen Datenbus 7 mit verschiedenen Speichereinheiten verbunden. In der Darstellung sind diese Speichereinheiten als RAM 3, ROM 4 und Flash 5 dargestellt. Über eine Eingabe-/ Ausgabe-Schnittstelle 6 kommuniziert die Recheneinheit 2 mit der Umgebung, in dem sie Eingangsgrößen E aufnimmt und Ausgangsgrößen A an das Kraftfahrzeug abgibt. Die Eingangsgrößen E sind dabei sehr vielfältig. Beispielhaft sollen hier nur die Raddrehzahl, die Motordrehzahl oder die Motortemperatur genannt werden. Als Ausgangsgröße A kann beispielsweise die Geschwindigkeit vorgegeben werden.

Ein Betriebssystem als Ablaufsteuerung und Bestandteil der zentralen Recheneinheit 2 konfiguriert das Steuergerät 1 dynamisch zur Laufzeit und sorgt für einen korrekten Ablauf der signalverarbeitenden Prozesse.

Der Prozessablauf des Steuergerätes 1 kann nun durch transiente Fehler gestört werden. Dies sind Fehler, die auf Grund von Strahlung z.B. zu Bit-Verfälschungen in einem Datenspeicher oder infolge elektromagnetischer Streuungen zu Rechenfehlern in der CPU führen. Zu diesen Fehlern zählen auch sporadisch wirksam werdende Softwarefehler, welche nicht schon im Entwurfsstadium der Software entdeckt und korrigiert werden konnten.

Die in dem Steuergerät 1 des Kraftfahrzeuges zyklisch abzuarbeitende, signalverarbeitende Software wird in Laufzeitobjekte unterteilt. Die Laufzeitobjekte enthalten Teile der im Programmcode implementierten Funktionalität. Sie kommunizieren mit der Außenwelt über Eingangs- und Ausgangsschnittstellen. Die Aktivierung der Laufzeitobjekte, die Berechnungsreihenfolge der einzelnen Laufzeitobjekte, welche parallel oder sequentiell erfolgen kann, und die dynamische interne Konfiguration der Laufzeitobjekte werden von dem Betriebssystem verwaltet.

Laufzeitobjekte können logisch bzw. architektonisch zusammengehörige Einheiten sein oder Anteile aus verschiedenen Komponenten enthalten.

Das Laufzeitobjekt kann als Funktion, als Task oder als Prozess ausgebildet sein und bekommt von anderen Laufzeitobjekten oder Schnittstellen zur Außenwelt Eingangsgrößen geliefert.

Mit Hilfe von Figur 2 soll der Aufbau eines Laufzeitobjektes 8 näher erläutert werden. Das Laufzeitobjekt besitzt ein Zustandsgrößenspeicher 9 zur Speicherung von internen Zustandsgrößen $x_K$ und zur Übertragung der Informationen zum nachfolgenden Abtastzeitpunkt. Dieser Zustandsgrößenspeicher 9 wird auch als "Gedächtnis" bezeichnet. Aus im Zustandsgrößenspeicher 9 gespeicherten alten Zustandsgrößen $x_{K-1}$ und neuen Eingangsgrößen $u_K$ werden durch einen ersten Algorithmus $f_K$ neue interne Zustandsgrößen $x_K$ berechnet.

Durch einen zweiten Algorithmus $g_K$ werden aus den Eingangsgrößen $u_K$ und den neuen internen Zustandsgrößen $x_K$ die Ausgabewerte $y_K$ berechnet.

Es gilt:

$$x_K = f_K (x_{K-1}; u_K)$$

$$y_K = g_K (x_K ; u_K)$$

Transiente Fehler können in diesem Laufzeitobjekt 8 an verschiedenen Stellen auftreten.

Bei fehlerhaften Eingangsgrößen $u_K$ wie z.B. Datenfehlern sind alle Berechnungen und Ausgangsgrößen $y_K$ betroffen und können falsch sein.

Tritt ein Fehler im Zustandsgrößenspeicher 9 z.B. durch einen RAM-Fehler auf, sind ebenfalls alle Berechnungen und Ausgangsgrößen $y_K$ potentiell betroffen. Bei Fehlern, die während der Berechnung des Algorithmus $f_K$ infolge von transienten Hardware- oder sporadisch wirksamen Software- Fehlern auftreten, sind alle Zustandsgrößen $x_K$ falsch, was sich auch auf die Ausgangsgrößen $y_K$ auswirkt, die somit ebenfalls fehlerbehaftet sind.

Treten infolge von transienten Hardware- oder Software-Fehlern Berechnungsfehler während der Berechnung des Algorithmus $g_K$ auf, so sind die Ausgangsgrößen $y_K$ falsch. Die Zustandsgrößen $x_K$ sind von diesen Berechnungsfehlern nicht betroffen.

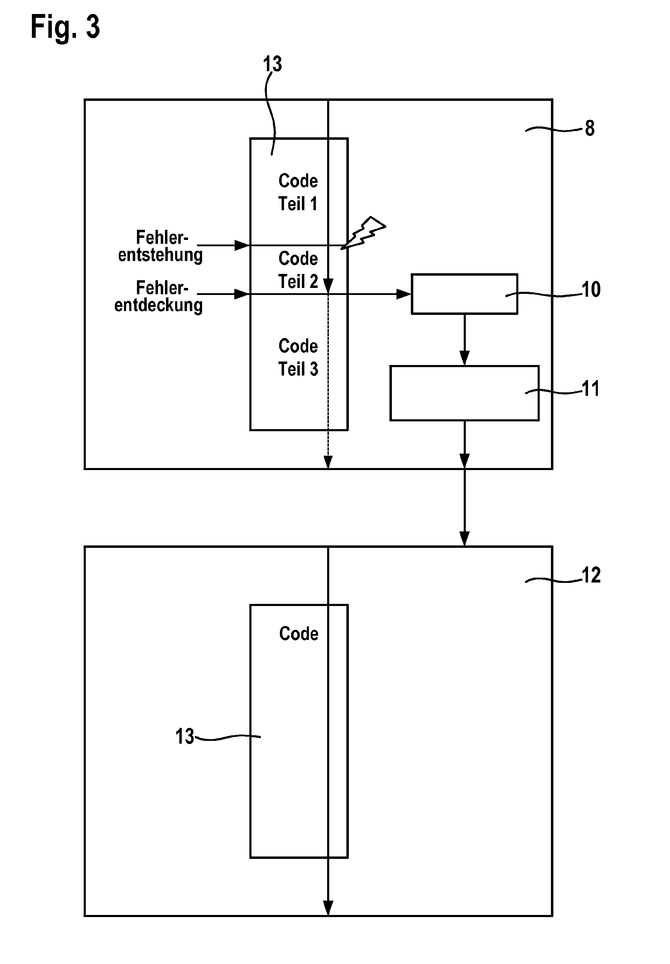

In Figur 3 wird aufgezeigt, wie die Fehlerbehandlung erfolgt.

Im korrekt ablaufenden Code, Teil 1 des Laufzeitobjektes 8 entsteht aufgrund von elektromagnetischer Einstrahlung oder radioaktiver bzw. kosmischer Strahlung ein transienter Fehler im Programmablauf. Der mit diesem Fehler behaftete Code wird als Teil 2 bezeichnet.

Der Code des Laufzeitobjektes wird kontinuierlich überwacht.

Dies erfolgt auf vielfältige Art und Weise. So können OS-Mechanismen wie Ressourcenüberwachung, Laufzeitfehlererkennung und Laufzeitfehlerüberwachung angewandt werden. Auch Anwendungs-Software kann zur Fehlerentdeckung genutzt werden. Hier bieten sich unter anderem Programmdurchflusssignaturen, Plausibilisierungen und Wertebereichsüberwachungen an. Neben den Software-Überwachungen sind auch Hardware-Überwachungen mittels Watchdog bzw. Adressbusüberwachung möglich.

Mit einer oder mehreren der beschriebenen Überwachungsmaßnahmen wird festgestellt, dass der Code Teil 2 fehlerhaft ausgeführt wird. Diese Fehlerentdeckung wird an das Betriebssystem gemeldet, welches wie beschrieben, als Ablaufsteuerung tätig ist. Das Betriebssystem bricht an dieser Stelle10 den Programmablauf des Laufzeitobjektes 8 ab. Der als Code, Teil 3 in Figur 3 dargestellte Programmcode wird nicht weiter bearbeitet.

Nach dem Abbruch des Laufzeitobjektes werden im voraus definierte Fehlerbehandlungsmaßnahmen 11 gestartet, um dass System möglichst schnell wieder in einen konsistenten und sicheren Zustand zurückzuführen.

Hier sind verschiedene Varianten vorgesehen. Am einfachsten ist es , wenn eine Routine aufgerufen wird, welche die Zustandsgröße $x_K$ und die Ausgangsgrößen $y_K$ vollständig oder teilweise mit alten Werten aus dem vorausgegangenen Rechenzyklus beschreibt. Es wird also das letzte fehlerfreie Ergebnis noch einmal verwendet.

Eine Alternative ist der Aufruf einer Routine, die die Zustandsgrößen $x_K$ und die Ausgangsgrößen $y_K$ mit vordefinierten und laufzeitobjektspezifischen Standardwerten überschreibt. So kann z.B. alles mit 0 beschrieben werden, was ebenfalls teilweise oder vollständig für alle Werte der Zustandsgrößen $x_K$ und der Ausgangsgrößen

$y_K$ erfolgen kann.

Eine weitere Möglichkeit besteht im Aufruf einer laufzeitobjektbezogenen Ersatzfunktion. Diese Ersatzfunktion muss speziell mit dem Ziel programmiert werden, dass die im Zustandsgrößenspeicher 9 abgelegten internen Zustandsgrößen $x_K$ und die Ausgangsgrößen $y_K$ des betroffenen Laufzeitobjektes 8 in einen definierten Zustand zu versetzen, der von aktuellen Eingangsgrößen $u_K$ abhängig ist.

Es bietet sich weiterhin an, eine Reinitialisierung mit Hilfe einer laufzeitobjektabhängigen Initialisierungsfunktion durchzuführen. Dabei werden als Startwerte die Initialisierungswerte als interne Zustandsgrößen $x_K$ bzw. Ausgangsgrößen $y_K$ gesetzt.

Alle diese Maßnahmen werden, wie bereits ausgeführt, spezifisch für jedes Laufzeitobjekt, z.B. als Callback-Routine definiert und bereitgestellt. Die Kontrolle der Fehlerbehandlung 11 erfolgt durch das Betriebssystem.

Ziel aller dieser Fehlerbehandlungsmaßnahmen ist die Bereitstellung von akzeptablen internen Zustandsgrößen $x_K$ und Ausgangsgrößen $y_K$. Der Fehler wird mit den genannten Maßnahmen in eine akzeptable Abweichung von der Normalfunktion umgewandelt, wobei diese Abweichung nach einiger Zeit vollständig verschwindet.

Nachdem die Fehlerbehandlungsmaßnahmen 11 abgeschlossen sind, veranlasst das Betriebssystem eine Fortsetzung des zuvor unterbrochenen Kontrollflusses und startet das durch die Programmflusssteuerung festgelegte nächstfolgende Laufzeitobjekt 12.

Die Auswahl der Fehlerbehandlungsmaßnahmen hängt nicht nur von der Art des Fehlers sondern auch von der Art des Laufzeitobjektes ab. So lassen sich die Laufzeitobjekte in verschieden Klassen einteilen.

Wenn das Laufzeitobjekt im wesentlichen signalverarbeitende Algorithmen enthält, sind dies Funktionen mit meist kurzer Einschwingzeit, d. h. wenn nach transienten Fehlern alle Eingangsgrößen wieder fehlerfrei sind und die Rechenoperationen korrekt ausgeführt werden, sind die Fehlerauswirkungen nach kurzer Zeit an den Ausgängen des Laufzeitobjektes nicht mehr nachvollziehbar. Ein solches Laufzeitobjekt ist relativ unkritisch. Hier sind prinzipiell alle aufgeführten Fehlerbehandlungsmaßnahmen einsetzbar. Da Standard (Default)- bzw. Passivwerte für alle internen Zustands - und Ausgangsgrößen existieren, ist es am einfachsten, diese Standardwerte den Zustands- und Ausgangsgrößen zuzuweisen.

Sind keine Default- oder Passivwerte vorhanden, wie es typischerweise bei der Verarbeitung von Signalen der Fall ist, welche auf kontinuierlichen physikalischen Größen beruhen, muss auf eine andere Fehlerbehandlung zurück gegriffen werden. Vorteilhaft ist hier die Anwendung einer Ersatzfunktion. Es ist aber auch die Verwendung alter Größen aus einem vorhergehenden Rechenzyklus möglich. Diese Größen werden in den Zustandsgrößenspeicher als interne Zustandsgrößen eingetragen bzw. als Ausgangsgrößen gesetzt.

Es können Probleme zur Laufzeit auftreten, wenn die zur Verfügung stehende Rechenleistung nicht den Anforderungen des implementierten Programmcodes entspricht, d.h. zur Abarbeitung des Programmcodes wird mehr Rechenzeit benötigt als vorgesehen ist. In diesem Fall wird bei laufendem Betrieb als Fehler eine Laufzeitüberschreitung angezeigt. Tritt dies ein, wird zur Fehlerbehandlung ein noch abzuarbeitendes Laufzeitobjekt übersprungen und durch eine Ersatzfunktion ersetzt, welche eine kürzere Rechenzeit benötigt.

**Patentansprüche**

1. Verfahren zur Behandlung von transienten Fehlern in Echtzeitsystemen, insbesondere in Steuergeräten von Kraftfahrzeugen, deren auf Programmcodes basierender Betriebsablauf von einer Ablaufsteuerung kontinuierlich überwacht wird **dadurch gekennzeichnet, dass** der Programmcode in eine Mehrzahl von Laufzeitobjekten unterteilt wird und bei Feststellung eines Fehlers in einem Laufzeitobjekt , dieses Laufzeitobjekt von der Ablaufsteuerung abgebrochen wird und während des Betriebsablaufs eine lokale Fehlerbehandlung innerhalb des Laufzeitobjektes durchgeführt wird, wobei die Fehlerbehandlung eine dem Laufzeitobjekt zugeordnete Maßnahme zur Erreichung eines sicheren Zustandes umfasst und nach abgeschlossener Fehlerbehandlung die Ausführung des nächstfolgenden Laufzeitobjektes gestartet wird.

2. Verfahren nach Anspruch 1 **dadurch gekennzeichnet, dass** das Laufzeitobjekt nach einer ersten Berechnungsvorschrift Eingangsgrößen und in einem Zustandsgrößenspeicher abgelegte interne Zustandsgrößen zu neuen Zustandsgrößen verarbeitet, die einerseits wieder im Zustandsgrößenspeicher gespeichert und andererseits mit einer zweiten Berechnungsvorschrift mit den Eingangsgrößen zu Ausgangsgrößen verrechnet werden.

3. Verfahren nach Anspruch 1 und 2 **dadurch gekennzeichnet, dass** die dem Laufzeitobjekt zugeordnete Fehlerbehandlung darin besteht, dass die bei der letzten erfolgreichen Ausführung des Laufzeitobjektes berechneten und im Zustandsgrößenspeicher gespeicherten Zustandsgrößen mindestens teilweise unverändert erneut im Zustandsgrößenspeicher gespeichert werden.

4. Verfahren nach Anspruch 1 und 2 **dadurch gekennzeichnet, dass** die dem Laufzeitobjekt zugeordnete Fehlerbehandlung darin besteht, dass die bei der letzten erfolgreichen Ausführung des Laufzeitobjektes berechneten Ausgangsgrößen mindestens teilweise unverändert erneut als Ausgangsgrößen verwendet werden.

**5.** Verfahren nach Anspruch 1 und 2 **dadurch gekennzeichnet, dass** die dem Laufzeitobjekt zugeordnete Fehlerbehandlung darin besteht, dass vordefinierte Standardwerte mindestens teilweise im Zustandsgrößenspeicher als interne Zustandsgrößen gespeichert und/oder als Ausgangsgrößen verwendet werden.

**6.** Verfahren nach Anspruch 1 und 2 **dadurch gekennzeichnet, dass** die dem Laufzeitobjekt zugeordnete Fehlerbehandlung darin besteht, dass eine Ersatzberechnungsvorschrift für Zustandsgrößen und/oder eine Ersatzberechnungsvorschrift für Ausgangsgrößen aufgerufen wird.

**7.** Verfahren nach Anspruch 1 und 2 **dadurch gekennzeichnet, dass** die dem Laufzeitobjekt zugeordnete Fehlerbehandlung darin besteht, dass eine vordefinierte Initialisierungsfunktion ausgeführt wird, wobei die Initialisierungswerte im Zustandsgrößenspeicher als interne Zustandsgrößen gespeichert und/oder als Ausgangsgrößen verwendet werden.

**8.** Verfahren nach einem der vorhergehenden Ansprüche 1 bis 7 **dadurch gekennzeichnet, dass** die dem Laufzeitobjekt zugeordnete Fehlerbehandlung darin besteht, dass mehrere verschiedene Fehlerbehandlungen zugeordnet werden, die in Abhängigkeit des Fehlers alternativ ausgewählt werden.

**9.** Verfahren nach Anspruch 2 **dadurch gekennzeichnet, dass** die Laufzeitobjekte in Abhängigkeit der ersten Berechnungsvorschrift für Zustandsgrößen und/oder der zweiten Berechnungsvorschrift für Ausgangsgrößen in Klassen eingeteilt werden, wobei jeder Klasse mindestens eine Fehlerbehandlung zugeordnet wird.

**10.** Verfahren nach Anspruch 9 **dadurch gekennzeichnet, dass** die Fehlerbehandlung durch Verwendung der vordefinierten Standardwerte erfolgt, wenn das Laufzeitobjekt signalverarbeitende Algorithmen enthält.

**11.** Verfahren nach Anspruch 9 **dadurch gekennzeichnet, dass** die Fehlerbehandlung die bei der letzten erfolgreichen Ausführung des Laufzeitobjektes berechneten Zustands- bzw. Ausgangsgrößen verwendet, wenn kontinuierliche, auf physikalischen Größen basierende Signale bearbeitet werden.

**12.** Verfahren zur Behandlung von transienten Fehlern in Echtzeitsystemen, insbesondere in Steuergeräten von Kraftfahrzeugen, deren auf Programmcodes basierender Betriebsablauf von einer Ablaufsteuerung kontinuierlich überwacht wird, **dadurch ge-**

**kennzeichnet, dass** der Programmcode in eine Mehrzahl von Laufzeitobjekten unterteilt wird und bei Feststellung einer Laufzeitüberschreitung in einem Laufzeitobjekt, ein nachfolgendes Laufzeitobjekt von der Ablaufsteuerung übersprungen wird und statt dessen während des Betriebsablaufs eine Fehlerbehandlung durchgeführt wird, wobei die Fehlerbehandlung eine dem Laufzeitobjekt zugeordnete Maßnahme zur Erreichung eines sicheren Zustandes umfasst und nach abgeschlossener Fehlerbehandlung die Ausführung des nächstfolgenden Laufzeitobjektes gestartet wird.

**Fig. 1**

**Fig. 2**

# Fig. 3

Europäisches
Patentamt

European
Patent Office

Office européen
des brevets

## EUROPÄISCHER RECHERCHENBERICHT

Nummer der Anmeldung

EP 08 10 5511

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2006/032617 A (BOSCH GMBH ROBERT [DE]; PFEIFFER WOLFGANG [DE]; WEIBERLE REINHARD [DE]) 30. März 2006 (2006-03-30)<br>* Zusammenfassung *<br>* Seiten 1-4; Abbildung 3 *<br>* Seite 17, Zeile 21 - Seite 21, Zeile 10 *<br>----- | 1-12 | INV.<br>G06F11/07 |
| Y | US 2003/079168 A1 (PIERCE SHAUN D [US] ET AL) 24. April 2003 (2003-04-24)<br>* Zusammenfassung *<br>* Abbildung 2 *<br>* Abbildung 3 *<br>* Absätze [0019], [0031] - [0037] *<br>----- | 1-12 | |
| A | WO 2006/045734 A (BOSCH GMBH ROBERT [DE]; WEIBERLE REINHARD [DE]; MUELLER BERND [DE]; HA) 4. Mai 2006 (2006-05-04)<br>* Zusammenfassung *<br>* Seite 5, Zeilen 5-25 *<br>* Seite 13, Zeilen 4-22 *<br>----- | 1-12 | |
| A | WO 2007/110294 A (IBM [US]; IBM UK [GB]; ARMSTRONG WILLIAM JOSEPH [US]; AZAGURY ALAIN CH) 4. Oktober 2007 (2007-10-04)<br>* Seite 2 *<br>----- | 1-12 | RECHERCHIERTE SACHGEBIETE (IPC)<br><br>G06F |
| A | US 5 619 409 A (SCHULTZ RONALD E [US] ET AL) 8. April 1997 (1997-04-08)<br>* Zusammenfassung; Abbildung 4 *<br>* Spalte 6, Zeilen 39-63 *<br>----- | 12 | |

Der vorliegende Recherchenbericht wurde für alle Patentansprüche erstellt

| Recherchenort | Abschlußdatum der Recherche | Prüfer |
|---|---|---|
| München | 16. Juni 2009 | Weber, Vincent |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 10 5511

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2009

| Im Recherchenbericht angeführtes Patentdokument | Datum der Veröffentlichung | Mitglied(er) der Patentfamilie | Datum der Veröffentlichung |
|---|---|---|---|
| WO 2006032617 A | 30-03-2006 | CN 101027647 A<br>DE 102004046611 A1<br>EP 1794680 A1<br>JP 2008513900 T<br>US 2008201618 A1 | 29-08-2007<br>30-03-2006<br>13-06-2007<br>01-05-2008<br>21-08-2008 |
| US 2003079168 A1 | 24-04-2003 | US 2006150036 A1 | 06-07-2006 |
| WO 2006045734 A | 04-05-2006 | CN 101048737 A<br>DE 102004051991 A1<br>EP 1810139 A1<br>JP 2008518293 T | 03-10-2007<br>27-04-2006<br>25-07-2007<br>29-05-2008 |
| WO 2007110294 A | 04-10-2007 | CN 101385003 A<br>EP 1999586 A2<br>US 2007239804 A1 | 11-03-2009<br>10-12-2008<br>11-10-2007 |
| US 5619409 A | 08-04-1997 | KEINE | |

EPO FORM P0461

Für nähere Einzelheiten zu diesem Anhang : siehe Amtsblatt des Europäischen Patentamts, Nr.12/82